# EUROPÄISCHE PATENTANMELDUNG

(11) **EP 3 486 852 A2**
(43) Veröffentlichungstag der Anmeldung: **22.05.2019**
(21) Anmeldenummer: 18206211.7
(22) Anmeldetag: 14.11.2018
(51) Int. Cl.: G06Q 20/32, G06Q 20/38, G06Q 20/40

(54) **VERFAHREN UND ANORDNUNG ZUM AUSLÖSEN EINER ELEKTRONISCHEN ZAHLUNG**

(30) Priorität: 15.11.2017 DE 102017126805; 05.12.2017 DE 102017128807
(71) Anmelder: Rubean AG, 81379 München (DE)
(72) Erfinder: Geupel, Hermann, 81925 München (DE)
(74) Vertreter: Heinze, Ekkehard

(57) **Zusammenfassung**

Die Erfindung betrifft ein Verfahren und eine Anordnung zum Auslösen einer elektronischen Zahlung über ein Händlerendgerät und eine mit diesem temporär über eine drahtlose Nahbereichs-Datenübertragung, NFC, verbundene und als SmartCard konfigurierte Kundenkarte.

## Beschreibung

Die Erfindung betrifft Verfahren zum Auslösen einer elektronischen Zahlung über ein Händlerendgerät und eine mit diesem temporär über eine drahtlose Nahbereichs-Datenübertragung, NFC, verbundene und als SmartCard konfigurierte Kundenkarte sowie eine Anordnung zur Durchführung solcher Verfahren.

Neben Online-Einkäufen werden seit Jahren zunehmend auch Einkäufe von Waren oder Dienstleistungen in Ladengeschäften, Supermärkten, Tankstellen etc. sowie die Vor-Ort-Bezahlung von Dienstleistungen bargeldlos "elektronisch" abgewickelt. In den letzten Jahren werden hierbei auch verstärkt Händlergeräte, sogenannte Point-of-Sales (PoS)-Terminals, eingesetzt, die zur Nahfeld-Datenkommunikation mit einer ebenfalls entsprechend ausgestatteten Bankkarte ausgerüstet sind.

Zudem werden massiv Entwicklungen betrieben, bei denen in einem intelligenten Kundengerät, insbesondere einem Smartphone, eine Bankkarte in virtualisierter Form implementiert ist, so dass der Besitzer des Smartphones seine Bankverbindung allein mittels des Smartphones - also ohne Einsatz einer physischen Bankkarte - nutzen und hiermit auch Bezahlvorgänge ausführen kann. Derartige Systeme werden vor allem in asiatischen Ländern inzwischen massenhaft genutzt.

Daneben hat das Verfahren der Nahfeld-Datenkommunikation gemäß dem NFC-Standard stetig weitere Verbreitung erlangt, auch über reine Bezahlvorgänge der oben erwähnten Art hinaus. Die Smartphones des Herstellers Apple bieten Herstellern von mobile Apps neuerdings eine Funktion an, über die das Smartphone NFC Data Exchange Format (NDEF) Daten aus anderen NFC Geräten auslesen kann.

In jene Entwicklungen ordnet sich die unveröffentlichte deutsche Patentanmeldung Nr. 102017115074.9 der Anmelderin ein.

Seit kurzem erlauben große Kartenorganisationen Händlern im Rahmen von Pilotprojekten ein handelsübliches Smartphone als Point-of-Sale (POS) Kartenakzeptanzterminal zu verwenden. Wenn der Händler ein Android Phone besitzt, kann er kleinere Beträge unterhalb des sogenannten CVM-Limits durch einfaches Ranhalten einer kontaktlosen EMV Kundenkarte an die Rückseite des eigenen Smartphones annehmen. Die Kommunikation zwischen Smartphone und Karte erfolgt über die Near Field Communication (NFC) Schnittstelle.

Beim Schutz des Terminalschlüssels, der an den Transaktionsdatensatz einen Message Authentication Code (MAC) anhängt und dem Backendserver damit nachweist, dass die Transaktion vom einem authentischen POS Terminal stammt, und der PIN der EMV Kundenkarte, die bei Beträgen oberhalb des Floor-Limits als zweiter Authentifizierungsfaktor auf den Bildschirm des Händler-Smartphones einzugeben ist und daher auch ,PIN on glass' genannt wird, bestehen bei den Kartenorganisationen unterschiedliche Sicherheitsanforderungen.

Eine Kartenorganisation erwartet, dass der Terminalschlüssel von einem Secure Element aus wirkt, das auch gegen Hardwareangriffe geschützt ist. Weil nur ganz bestimmte, hochwertige Mobilfunkendgeräte solche embedded Secure Elements (eSE) beinhalten, war die Genehmigung der pilotweisen Verwendung von handelsüblichen Phones als POS Terminals bisher auf diese Typen beschränkt. Zudem ist für das Beschreiben dieser eSE Komponenten eine Genehmigung des Geräteherstellers notwendig. Die gleiche Kartenorganisation erlaubt ,PIN on glass nur über ein Trusted Execution Environment (TEE), also eine App, die unter einem sicheren Betriebssystem läuft und einer Android basierten Malware während der PIN Eingabe keine Zugriffsmöglichkeit auf den Phonebildschirm gibt. Damit koppelt diese Kartenorganisation die Annahme von höheren Beträgen an Smartphones, die mit einem TEE ausgestattet sind.

Eine andere Kartenorganisation ermuntert Anbieter mobiler POS Terminals dazu, den Terminalschlüssel und die PIN der EMV Kundenkarte nicht durch geräteherstellerspezifische Merkmalen zu schützen, sondern den Terminalschlüssel durch Einsatz von Whitebox Kryptographie (WBC) unter dem Handybetriebssystem und die PIN durch ein externes, besonders geschütztes Gerät zu realisieren. Als Anschauungsbeispiel dafür dient der per Bluetooth ans Phone angebundene NFC Kartenleser von Square, der die PIN vor der Übertragung an den Bankenserver mit einem im externen Gerät geschützten Schlüssel verschlüsselt.

Die neuen mobilen POS (mPOS)-Konzepte haben gemeinsam, dass sie während des Karten-Ranhaltens bzw. PIN-Eingebens Sicherheitskomponenten im oder um das Phone herum vorschreiben, um die besonders schützenswerten Informationen wie den Terminschlüssel und die Kundenkarten-PIN zu schützen. Die Abhängigkeit von zusätzlichen Sicherheitskomponenten im oder um das Endgerät herum bedeuten Nachteile für die Verbreitung des neuen, mobiltelefon-basierten mPOS Konzeptes. Die Abhängigkeit von Sicherheitskomponenten im Mobiltelefon schränken die mPOS Lösung auf teure und gerade in Entwicklungsländern wenig verbreitete Mobiltelefone ein und machen sie zudem noch vom Goodwill des Herstellers abhängig. Die Verwendung eines externen Gerätes insbesondere zur Verschlüsselung der PIN verursacht wegen der instabilen Bluetooth-Verbindung zum Mobiltelefon erfahrungsgemäß des öfters Störungsfälle und außerdem Zusatzkosten, die man durch den mobiltelefon-basierten mPOS Ansatz gerade vermeiden will.

Der Erfindung liegt die Aufgabe zugrunde, ein verbessertes Verfahren der gattungsgemäßen Art und eine entsprechende Anordnung bereitzustellen, die unter Einhaltung des erforderlichen Schutzes des Terminalschlüssels und der Kundenkarten-PIN kostengünstiger und zuverlässiger für den Händler sind als die gängigen Lösungen.

Die Aufgabe wird durch das Verfahren gemäß Anspruch 1 oder 4 und die Anordnung gemäß Anspruch 20 gelöst. Vorteilhafte Ausführungen der Erfindung sind Gegenstand der jeweiligen abhängigen Ansprüche.
a) Bereitstellung einer Transaktionsdatei auf dem Händlerendgerät
b) Übermittlung der Transaktionsdatei vom Händlerendgerät an die Kundenkarte
c) Erzeugung einer digitalen Signatur zur Transaktionsdatei auf der Kundenkarte und Ausgabe der Kundenkartensignatur an das Händlerendgerät
d) Erzeugung einer um die Kundenkartensignatur erweiterten Transaktionsdatei
e) Übermittlung der erweiterten Transaktionsdatei vom Händlerendgerät an eine mit diesem ebenfalls temporär über NFC verbundene Händlerkarte
f) Erzeugung einer digitalen Signatur zur erweiterten Transaktionsdatei auf der Händlerkarte und Ausgabe der Händlerkartensignatur an das Händlerendgerät
g) Erzeugung einer finalen Transaktionsdatei, die die Kunden- und Händlerkartensignatur mit umfasst, im Händlerendgerät,
h) Übermittlung der finalen Transaktionsdatei vom Händlerendgerät über ein Mobilfunknetz oder WLAN an einen Zahlungsdienstserver,
i) Abholen oder Empfang einer Transaktions-Bestätigungsnachricht vom Zahlungsdienstserver am Händlerendgerät.

In einer weiteren Ausführung der Erfindung werden die Schritte e) bis i) für eine Mehrzahl von erweiterten Transaktionsdateien durchgeführt, die jeweils vorab mittels der Schritte a) bis d) auf dem Händlerendgerät erzeugt und gesammelt wurden. Damit wird dem Händler erspart, dass er für jede einzelne Transaktion seine Händlerkarte an das Händlerendgerät halten muss. Er kann mittels der Schritte a) bis d) Transaktionen offline sammeln und diese dann durch ein einmaliges Ranhalten der Händlerkarte an das Händlerendgerät mittels der Schritte e) bis i) alles in einem Paket oder einzeln signieren und an den Zahlungsdienstserver schicken. In Entwicklungsländern, für die das neuartige, kostengünstige Händlerendgerät auch konzipiert ist, können auf diese Weise Kartenzahlungen auch an Orten ohne Internetverbindung angenommen und schließlich, an einem Ort mit Internetverbindung gebündelt an den angebundenen Zahlungsdienstleister geschickt werden.

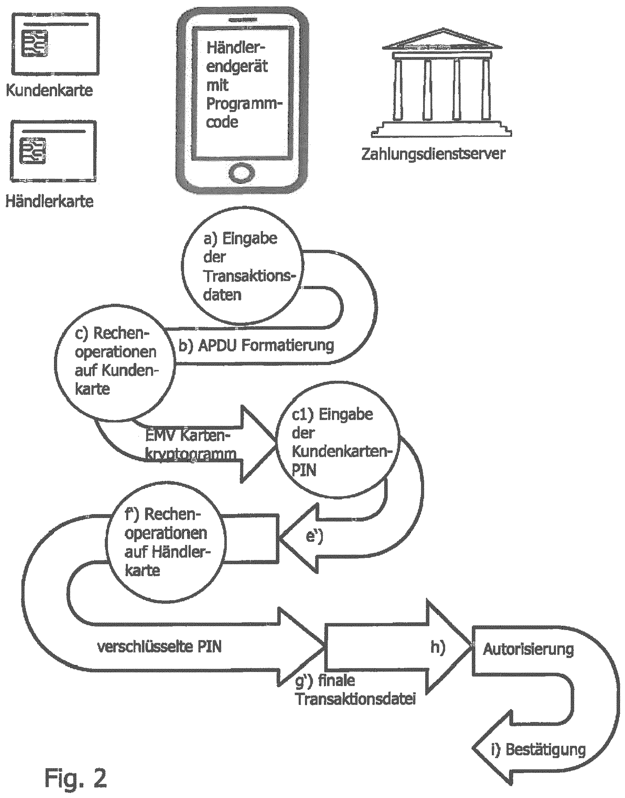

Gemäß einem weiteren, relativ unabhängigen Aspekt der Erfindung wird ein schematisch in Fig. 2 dargestelltes Verfahren vorgeschlagen, welches die folgenden Schritte aufweist:
a) Bereitstellung einer Transaktionsdatei auf dem Händlerendgerät
b) Übermittlung der Transaktionsdatei vom Händlerendgerät an die Kundenkarte
c) Erzeugung einer digitalen Signatur zur Transaktionsdatei auf der Kundenkarte und Ausgabe der Kundenkartensignatur an das Händlerendgerät
c1) Eingabe der online geprüften Kundenkarten-PIN am Händlerendgerät
d') vorläufige Verschlüsselung der Kundenkarten-PIN im Händlerendgerät
e') Übermittlung der Transaktionsdatei, Kundenkartensignatur und vorläufig verschlüsselten Kundenkarten-PIN vom Händlerendgerät an eine mit diesem ebenfalls temporär über NFC verbundene Händlerkarte
f) Entschlüsselung der Kundenkarten-PIN auf der Händlerkarte, Verschlüsselung der Kundenkarten-PIN mit einem auf der Händlerkarte sicher gespeicherten Schlüssel und Ausgabe der umgeschlüsselten Kundenkarten-PIN an das Händlerendgerät
g') im Händlerendgerät Erzeugung einer digitalen Händlerkartensignatur zur erweiterten, die Kundenkartensignatur und umgeschlüsselte Kundenkarten-PIN mit enthaltenden finalen Transaktionsdatei und Erzeugung einer finalen Transaktionsdatei, die die Kundenkartensignatur, umgeschlüsselte Kundenkarten-PIN und Händlerkartensignatur mit umfasst
h) Übermittlung der finalen Transaktionsdatei vom Händlerendgerät über ein Mobilfunknetz oder WLAN an einen Zahlungsdienstserver
i) Abholen oder Empfang einer Transaktions-Bestätigungsnachricht vom Zahlungsdienstserver am Händlerendgerät.

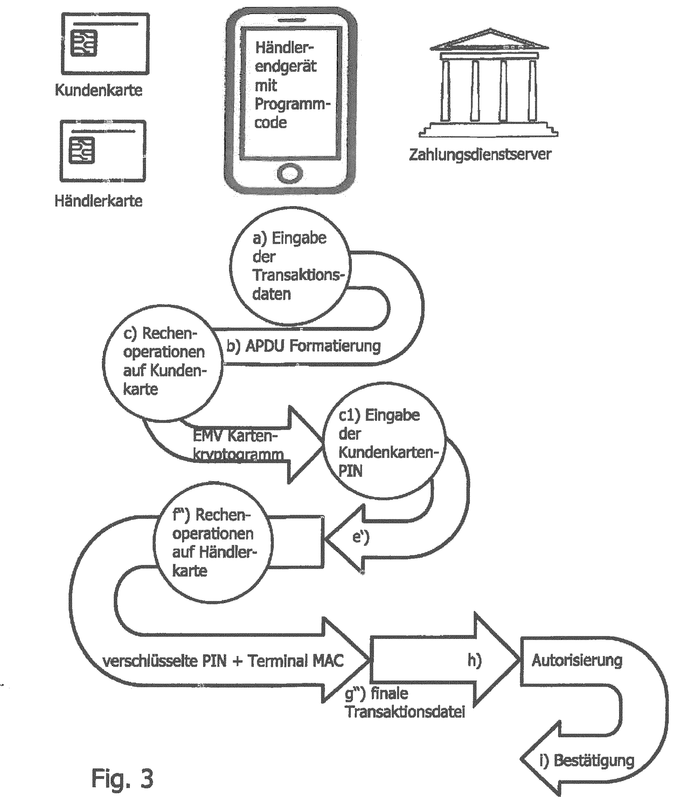

Eine unter Sicherheitsaspekten wichtige Ausführung des vorgeschlagenen Verfahrens ist in Fig. 3 schematisch dargestellt, wobei die Schritte f) und g') ersetzt sind durch die Schritte
f") Entschlüsselung der Kundenkarten-PIN auf der Händlerkarte, Verschlüsselung der Kundenkarten-PIN mit einem auf der Händlerkarte sicher gespeicherten Schlüssel und Erzeugung einer digitalen Signatur zu einer erweiterten Transaktionsdatei auf der Händlerkarte, danach
f1")Ausgabe der umgeschlüsselten Kundenkarten-PIN und der Händlerkartensignatur an das Händlerendgerät
g") Erzeugung einer finalen Transaktionsdatei im Händlerendgerät, die die Kundenkartensignatur, umgeschlüsselte Kundenkarten-PIN und Terminalkartensignatur mit umfasst.

Die letztgenannte Ausführung kann dahingehend weiter modifiziert sein, dass folgende Schritte ersetzt sind:
c1) durch c1') handschriftliche Unterschrift des Kunden auf dem Bildschirm des Händlerendgerätes
e') durch e") Übermittlung der Transaktionsdatei und Kundenkartensignatur vom Händlerendgerät an die Händlerkarte,
f") durch f") Erzeugung einer digitalen Signatur zur Transaktionsdatei auf der Händlerkarte, f1") durch f1"') Ausgabe der Händlerkartensignatur an das Händlerendgerät, und
g") durch g"') Erzeugung einer finalen Transaktionsdatei im Händlerendgerät, die die Kundenkartensignatur mit umfasst.

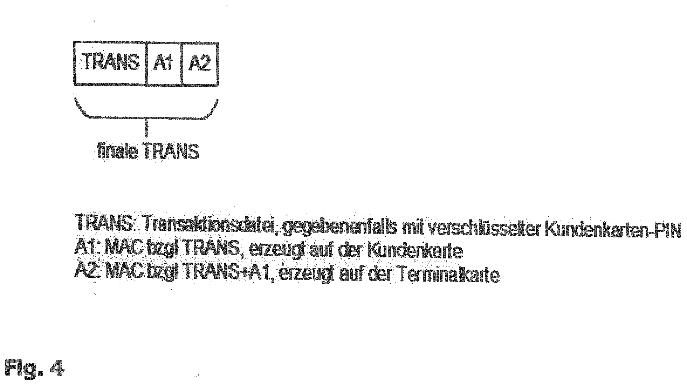

In einer weiteren Ausführung der Erfindung besteht die Händlerkartensignatur in den Schritten f, g' bzw. f" aus einem Message Authentication Code, MAC. Eine beispielhafte Zusammensetzung einer Transaktionsdatei ist in Fig. 4 dargestellt.

In einer weiteren Ausführung der erfindungsgemäßen Verfahren werden die Daten der Transaktionsdatei, insbesondere die Kundenkarten-PIN, zwischen dem Händlerendgerät und der Händlerkarte verschlüsselt übermittelt. Hierbei werden insbesondere die Daten gemäß des ISO 7816-4 Secure Messaging Standards verschlüsselt, nachdem zwischen dem Händlerendgerät und der Händlerkarte eine auf einem gemeinsamen Root Zertifikat basierende Single oder Mutual Authentication stattgefunden hat.

Spezieller wird im Rahmen der gemäß dem Secure Messaging Standard nötigen Authentifizierung eine Händlerkarten-PIN oder andere Authentifizierungsinformation vom Händlerendgerät an die Händlerkarte übermittelt, wenn auf der Seite des Händlerendgerätes die Bedingungen einer bei der Personalisierung des Händlerendgerätes ausgewählten Authentifizierungs-Policy erfüllt sind, etwa die Eingabe der PIN und/oder erfolgreiche biometrische Erkennung des Händlers und/oder passende Geo-Location des Händlerendgeräts und/oder erlaubtes Roaming und/oder erlaubte maximale Höhe der Transaktionssumme.

In einer aus praktischen Erwägungen vorteilhaften Ausführung ist vorgesehen, dass der gemäß dem Secure Messaging Standard verwendete symmetrische Schlüssel für eine Mehrzahl von Transaktionen gilt.

Der Händler sollte sich vorzugsweise nicht für jede Transaktion separat, zum Beispiel durch Eingabe einer PIN oder Auflegen eines biometrisch registrierten Fingers, am Händlerendgerät authentifizieren müssen. Diese Authentifizierung könnte zum Beispiel auf jeden Start der Point-of-Sale Kartenakzeptanz-App begrenzt sein. Um den symmetrischen Secure-Messaging Schlüssel zwischen Terminalkarte und Händlerendgerät etablieren zu können, müssen sich Karte und Gerät via NFC austauschen. Dafür muss der Händler die Terminalkarte an den Rücken seines Händlerendgerätes halten, nachdem er sich authentifiziert hat. Dieser Prozess könnte wie gesagt im Rahmen des Startens der App stattfinden.

Vorteilhafterweise ist das Händlerendgerät ein handelsübliches Smartphone, das eine bidirektionale NFC Kommunikation unterstützt.

In einer weiteren, unter Sicherheitsaspekten bevorzugten Ausführung sind die Dateneingabe und -ausgabe über den Bildschirm des Händlerendgerätes und die drahtlose Nahbereichs-Datenübertragung zwischen dem Händlerendgerät und der Kunden- bzw. Händlerkarte dadurch geschützt,
- dass der Programmcode erkennt, ob der Betriebssystem Kernel des Händlerendgeräts ge-rootet wurde und in diesem Fall seinen Betrieb stoppt, und
- dass der Programmcode mittels Obfuscation gegen Reverse Engineering geschützt ist.

Eine Zulassung durch die Kartenorganisationen werden voraussichtlich nur diejenigen Händlerendgeräte, das heißt vorzugsweise die handelsüblichen Smartphones bekommen, die einen Sicherheitsmechanismus eingebaut haben, mit dem ein Routing des Phone-Betriebssystems erkannt wird.

In einer bevorzugten Ausführung dieser Variante ist vorgesehen, dass der Programmcode dem Händler gegenüber dadurch als echt erweist, dass er einen Authentizitätscode einblendet, den der Händler im Rahmen der Personalisierung des Programmcodes über ein anderes Nutzerendgerät, zum Beispiel einen Laptop, festgelegt hat.

In einer weiteren, unter Sicherheitsaspekten bevorzugten Ausführung ist vorgesehen, dass der Authentizitätscode aus Vertraulichkeitsgründen nur über eine vorbestimmte Zeitspanne eingeblendet wird.

Der Authentizitätscode wird vorzugsweise nur nach dem Starten der Point-of-Sale Kartenakzeptanz-App kurz eingeblendet, um den Händler zu vergewissern, dass er die echte App aufgerufen hat. Spätestens dann, wenn der Händler dem Kunden die Bezahldaten auf dem Händlerendgerät zeigt, sollte der Authentizitätscode aus Vertraulichkeitsgründen nicht mehr eingeblendet sein.

Ebenfalls unter Sicherheitsaspekten bevorzugt ist eine weitere Ausführung, bei der die Eingabe der Kundenkarten- und Händlerkarten-PIN zusätzlich dadurch geschützt ist, dass das Tastaturfeld für jede PIN Eingabe zufällig verwürfelt ist. Damit soll ein Phishing der PIN zusätzlich erschwert werden.

Eine weitere vorteilhafter Ausführung des Verfahrens sieht vor, dass die Eingabe der Kundenkarten- und Händlerkarten-PIN dadurch zusätzlich geschützt ist, dass die Händlerkarte als Display Karte mit Tastaturfeld ausgebildet ist. Wenn neben dem Terminalsignaturschlüssel und Kundenkarten-PIN-Verschlüsselungsschlüssel auch noch die Anzeige des Bezahlbetrags und die Eingabe der Kundenkarten-PIN in die Terminalkarte ausgelagert werden, fungiert das Händlerendgerät, vorzugsweise ein handelsübliches Android Phone, im Wesentlichen nur noch als Transportkanal für die auf der Terminalkarte eingegebenen und verschlüsselten Bezahlinformationen.

In einer weiteren Ausführung der Erfindung ist die drahtlose Nahbereichs-Datenübertragung zwischen dem Händlerendgerät und der Kunden- bzw. Händlerkarte dadurch zusätzlich geschützt, dass sich der Programmcode auf dem Händlerendgerät beim HCE Softwaremodul des Händlerendgeräts, über das die NFC Kommunikation läuft, als vorrangiger Dienst registriert.

Als weitere Option für die Ausführung der vorgeschlagenen Verfahren finden in den Schritten f, f oder f" bzw. g', g" oder g"' auch Ver- und/oder Entschlüsselungsvorgänge zum Aufbau einer TLS Kanalverschlüsselung zwischen dem Händlerendgerät und dem Zahlungsdienstserver statt.

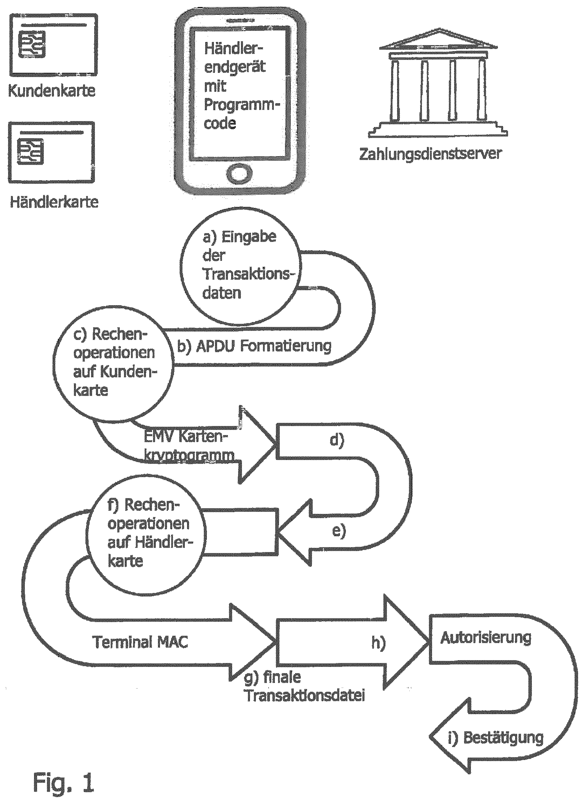

Implementierungen einer zur Ausführung der erfindungsgemäßen Verfahren geeigneten Anordnung sind, ebenso wie die erfindungsgemäßen Verfahrensschritte, den Figuren 1-3 und den obigen Erläuterungen zu den vorgeschlagenen Verfahren zu entnehmen und werden hier nicht im Einzelnen nochmals beschrieben.

Es wird jedoch darauf hingewiesen, dass eine Anordnung zum Auslösen einer elektronischen Zahlung umfasst:
- einen Zahlungsdienstserver,
- ein Händlerendgerät, das einen Programmcode zur Ausführung von Schritten eines Verfahrens zum Auslösen der elektronischen Zahlung und zur Erzeugung einer erweiterten und/oder einer finalen Transaktionsdatei aufweist,
- eine mit dem Händlerendgerät temporär über eine drahtlose Nahbereichs-Datenübertragung, NFC, verbundene und als SmartCard konfigurierte Kundenkarte, die kryptografische Schlüssel und Algorithmen enthält, um eine Kundenkartensignatur zu erzeugen, und
- eine mit dem Händlergerät ebenfalls temporär über NFC verbundene, als SmartCard konfigurierte Händlerkarte, die kryptografische Schlüssel und Algorithmen enthält, um die Kundenkarten-PIN sicher zu verschlüsseln und/oder eine Händlerkartensignatur zu erzeugen.

In einer Ausführung der Anordnung ist der Programmcode im Händlerendgerät dazu ausgebildet, aus einer im Händlerendgerät bereitgestellten Transaktionsdatei und von der Kundenkarte empfangenen Kundenkartensignatur die erweiterte Transaktionsdatei zu erzeugen und aus der erweiterten Transaktionsdatei und einer von der Händlerkarte empfangenen Händlerkartensignatur die finale Transaktionsdatei zu erzeugen, und
die Händlerkarte ist dazu ausgebildet, eine vom Händlerendgerät empfangene vorläufig verschlüsselte Kundenkarten-PIN zu entschlüsseln und mit einem auf der Händlerkarte sicher gespeicherten Schlüssel neu zu verschlüsseln.

In einer Ausgestaltung dieser Anordnung, die dem Händler eine vereinfachte Arbeitsweise mit dem vorgeschlagenen System ermöglicht, sind ein Arbeitsspeicher und der Programmcode im Händlerendgerät dazu ausgebildet, eine Mehrzahl von im Händlerendgerät erzeugten erweiterten Transaktionsdateien zwischenzuspeichern und den zwischengespeicherten erweiterten Transaktionsdateien die Händlerkartensignatur zuzuordnen und sie in einemzusammenfassenden Sendevorgang an den Zahlungsdienstserver zu übermitteln.

In einer weiteren Ausführung der Anordnung ist der Programmcode im Händlerendgerät dazu ausgebildet, eine am Händlerendgerät eingegebene Kundenkarten-PIN vorläufig zu verschlüsseln sowie aus einer im Händlerendgerät bereitgestellten Transaktionsdatei, einer von der Kundenkarte empfangenen Kundenkartensignatur und einer von der Händlerkarte empfangenen umgeschlüsselten Kundenkarten-PIN eine finale Transaktionsdatei zu erzeugen.

Gemäß einer weiteren Option zur Ausgestaltung der erfindungsgemäßen Anordnung umfasst diese ein anderes Nutzerendgerät zur Ausführung einer Personalisierung des im Händlerendgerät gespeicherten Programmcodes, beispielsweise einen Laptop.

Die Ausführung der Erfindung ist nicht auf diese Beispiele beschränkt, sondern ebenso in einer Vielzahl von Abwandlungen möglich, die im Rahmen fachgemäßen Handelns liegen.

Aspekte der Erfindung:
1. Verfahren zum Auslösen einer elektronischen Zahlung über ein Händlerendgerät und eine mit diesem temporär über eine drahtlose Nahbereichs-Datenübertragung, NFC, verbundene und als SmartCard konfigurierte Kundenkarte, mit den Schritten
   d) Bereitstellung einer Transaktionsdatei auf dem Händlerendgerät
   e) Übermittlung der Transaktionsdatei vom Händlerendgerät an die Kundenkarte
   f) Erzeugung einer digitalen Signatur zur Transaktionsdatei auf der Kundenkarte und Ausgabe der Kundenkartensignatur an das Händlerendgerät
   j) Erzeugung einer um die Kundenkartensignatur erweiterten Transaktionsdatei
   k) Übermittlung der erweiterten Transaktionsdatei vom Händlerendgerät an eine mit diesem ebenfalls temporär über NFC verbundene Händlerkarte
   l) Erzeugung einer digitalen Signatur zur erweiterten Transaktionsdatei auf der Händlerkarte und Ausgabe der Händlerkartensignatur an das Händlerendgerät
   m) Erzeugung einer finalen Transaktionsdatei, die die Kunden- und Händlerkartensignatur mit umfasst, im Händlerendgerät,
   n) Übermittlung der finalen Transaktionsdatei vom Händlerendgerät über ein Mobilfunknetz oder WLAN an einen Zahlungsdienstserver,
   o) Abholen oder Empfang einer Transaktions-Bestätigungsnachricht vom Zahlungsdienstserver am Händlerendgerät.
2. Verfahren nach Aspekt 1, wobei die Schritte e) bis i) zusammen für eine Mehrzahl von erweiterten Transaktionsdateien durchgeführt werden, die vorab jeweils mittels der Schritte a) bis d) auf dem Händlerendgerät erzeugt und dann angesammelt werden.
3. Verfahren nach Aspekt 2, wobei sowohl die Schritte e) und f) als auch die Schritte g) bis i) für jede Transaktion einzeln oder mehrere Transaktionen zusammenfassend, zeitlich getrennt von den Schritten a) bis d) durchgeführt werden.
4. Verfahren zum Auslösen einer elektronischen Zahlung über ein Händlerendgerät und eine mit diesem temporär über eine drahtlose Nahbereichs-Datenübertragung (NFC) verbundene und als SmartCard konfigurierte Kundenkarte, mit den Schritten
   d) Bereitstellung einer Transaktionsdatei auf dem Händlerendgerät
   e) Übermittlung der Transaktionsdatei vom Händlerendgerät an die Kundenkarte
   f) Erzeugung einer digitalen Signatur zur Transaktionsdatei auf der Kundenkarte und Ausgabe der Kundenkartensignatur an das Händlerendgerät
   c1) Eingabe der online geprüften Kundenkarten-PIN am Händlerendgerät
   d') vorläufige Verschlüsselung der Kundenkarten-PIN im Händlerendgerät
   e') Übermittlung der Transaktionsdatei, Kundenkartensignatur und vorläufig verschlüsselten Kundenkarten-PIN vom Händlerendgerät an eine mit diesem ebenfalls temporär über NFC verbundene Händlerkarte
   f) Entschlüsselung der Kundenkarten-PIN auf der Händlerkarte, Verschlüsselung der Kundenkarten-PIN mit einem auf der Händlerkarte sicher gespeicherten Schlüssel und Ausgabe der umgeschlüsselten Kundenkarten-PIN an das Händlerendgerät
   g') im Händlerendgerät Erzeugung einer digitalen Händlerkartensignatur zur erweiterten, die Kundenkartensignatur und umgeschlüsselte Kundenkarten-PIN mit enthaltenden finalen Transaktionsdatei und Erzeugung einer finalen Transaktionsdatei, die die Kundenkartensignatur, umgeschlüsselte Kundenkarten-PIN und Händlerkartensignatur mit umfasst
   j) Übermittlung der finalen Transaktionsdatei vom Händlerendgerät über ein Mobilfunknetz oder WLAN an einen Zahlungsdienstserver
   k) Abholen oder Empfang einer Transaktions-Bestätigungsnachricht vom Zahlungsdienstserver am Händlerendgerät.
5. Verfahren nach Aspekt 4, wobei die Schritte f) und g') ersetzt sind durch die Schritte
   f") Entschlüsselung der Kundenkarten-PIN auf der Händlerkarte, Verschlüsselung der Kundenkarten-PIN mit einem auf der Händlerkarte sicher gespeicherten Schlüssel und Erzeugung einer digitalen Signatur zu einer erweiterten Transaktionsdatei auf der Händlerkarte, danach
   f1")Ausgabe der umgeschlüsselten Kundenkarten-PIN und der Händlerkartensignatur an das Händlerendgerät
   g") Erzeugung einer finalen Transaktionsdatei im Händlerendgerät, die die Kundenkartensignatur, umgeschlüsselte Kundenkarten-PIN und Terminalkartensignatur mit umfasst.
6. Verfahren nach Aspekt 5, wobei folgende Schritte ersetzt sind:
   c1) durch c1') handschriftliche Unterschrift des Kunden auf dem Bildschirm des Händlerendgerätes
   e') durch e") Übermittlung der Transaktionsdatei und Kundenkartensignatur vom Händlerendgerät an die Händlerkarte,
   f") durch f") Erzeugung einer digitalen Signatur zur Transaktionsdatei auf der Händlerkarte, f1") durch f1") Ausgabe der Händlerkartensignatur an das Händlerendgerät, und
   g") durch g'") Erzeugung einer finalen Transaktionsdatei im Händlerendgerät, die die Kundenkartensignatur mit umfasst.
7. Verfahren nach einem der vorangehenden Aspekte, wobei die Händlerkartensignatur in den Schritten f, g' bzw. f" aus einem Message Authentication Code, MAC, besteht.
8. Verfahren nach einem der vorangehenden Aspekte, wobei die Daten der Transaktionsdatei, insbesondere die Kundenkarten-PIN, zwischen dem Händlerendgerät und der Händlerkarte verschlüsselt übermittelt werden.
9. Verfahren nach Aspekt 8, wobei die Daten gemäß des ISO 7816-4 Secure Messaging Standards verschlüsselt werden, nachdem zwischen dem Händlerendgerät und der Händlerkarte eine auf einem gemeinsamen Root Zertifikat basierende Single oder Mutual Authentication stattgefunden hat.
10. Verfahren nach Aspekt 9, wobei im Rahmen der gemäß dem Secure Messaging Standard nötigen Authentifizierung eine Händlerkarten-PIN oder andere Authentifizierungsinformation vom Händlerendgerät an die Händlerkarte übermittelt wird, wenn auf der Seite des Händlerendgerätes die Bedingungen einer bei der Personalisierung des Händlerendgerätes ausgewählten Authentifizierungs-Policy erfüllt sind, etwa die Eingabe der PIN und/oder erfolgreiche biometrische Erkennung des Händlers und/oder passende Geo-Location des Händlerendgeräts und/oder erlaubtes Roaming und/oder erlaubte maximale Höhe der Transaktionssumme.
11. Verfahren nach Aspekt 9 oder 10, wobei der gemäß dem Secure Messaging Standard verwendete symmetrische Schlüssel für eine Mehrzahl von Transaktionen gilt.
12. Verfahren nach einem der vorangehenden Aspekte, wobei das Händlerendgerät ein handelsübliches Smartphone ist, das eine bidirektionale NFC Kommunikation unterstützt.
13. Verfahren nach einem der vorangehenden Aspekte, wobei die Dateneingabe und -ausgabe über den Bildschirm des Händlerendgerätes und die drahtlose Nahbereichs-Datenübertragung zwischen dem Händlerendgerät und der Kunden- bzw. Händlerkarte dadurch geschützt sind,
   - dass der Programmcode erkennt, ob der Betriebssystem Kernel des Händlerendgeräts ge-rootet wurde und in diesem Fall seinen Betrieb stoppt, und
   - dass der Programmcode mittels Obfuscation gegen Reverse Engineering geschützt ist.
14. Verfahren nach Aspekt 13, wobei sich der Programmcode dem Händler gegenüber dadurch als echt erweist, dass er einen Authentizitätscode einblendet, den der Händler im Rahmen der Personalisierung des Programmcodes über ein anderes Nutzerendgerät, zum Beispiel einen Laptop, festgelegt hat.
15. Verfahren nach Aspekt 14, wobei der Authentizitätscode aus Vertraulichkeitsgründen nur über eine vorbestimmte Zeitspanne eingeblendet wird.
16. Verfahren nach einem der vorangehenden Aspekte, wobei die Eingabe der Kundenkarten- und Händlerkarten-PIN zusätzlich dadurch geschützt ist, dass das Tastaturfeld für jede PIN Eingabe zufällig verwürfelt ist.
17. Verfahren nach einem der vorangehenden Aspekte, wobei die Eingabe der Kundenkarten- und Händlerkarten-PIN dadurch zusätzlich geschützt ist, dass die Händlerkarte als Display Karte mit Tastaturfeld ausgebildet ist.
18. Verfahren nach einem der vorangehenden Aspekte, wobei die drahtlose Nahbereichs-Datenübertragung zwischen dem Händlerendgerät und der Kunden- bzw. Händlerkarte dadurch zusätzlich geschützt ist,
   dass sich der Programmcode auf dem Händlerendgerät beim HCE Softwaremodul des Händlerendgeräts, über das die NFC Kommunikation läuft, als vorrangiger Dienst registriert.
19. Verfahren nach einem der vorangehenden Aspekte, wobei in den Schritten f, f oder f" bzw. g', g" oder g'" auch Ver- und/oder Entschlüsselungsvorgänge zum Aufbau einer TLS Kanalverschlüsselung zwischen dem Händlerendgerät und dem Zahlungsdienstserver stattfinden.
20. Anordnung zum Auslösen einer elektronischen Zahlung, umfassend
   - einen Zahlungsdienstserver,
   - ein Händlerendgerät, das einen Programmcode zur Ausführung von Schritten eines Verfahrens zum Auslösen der elektronischen Zahlung und zur Erzeugung einer erweiterten und/oder einer finalen Transaktionsdatei aufweist,
   - eine mit dem Händlerendgerät temporär über eine drahtlose Nahbereichs-Datenübertragung, NFC, verbundene und als SmartCard konfigurierte Kundenkarte, die kryptografische Schlüssel und Algorithmen enthält, um eine Kundenkartensignatur zu erzeugen, und
   - eine mit dem Händlergerät ebenfalls temporär über NFC verbundene, als SmartCard konfigurierte Händlerkarte, die kryptografische Schlüssel und Algorithmen enthält, um die Kundenkarten-PIN sicher zu verschlüsseln und/oder eine Händlerkartensignatur zu erzeugen.
21. Anordnung nach Aspekt 20, wobei der Programmcode im Händlerendgerät dazu ausgebildet ist, aus einer im Händlerendgerät bereitgestellten Transaktionsdatei und von der Kundenkarte empfangenen Kundenkartensignatur die erweiterte Transaktionsdatei zu erzeugen und aus der erweiterten Transaktionsdatei und einer von der Händlerkarte empfangenen Händlerkartensignatur die finale Transaktionsdatei zu erzeugen und
   die Händlerkarte dazu ausgebildet ist, eine vom Händlerendgerät empfangene vorläufig verschlüsselte Kundenkarten-PIN zu entschlüsseln und mit einem auf der Händlerkarte sicher gespeicherten Schlüssel neu zu verschlüsseln.
22. Anordnung nach Aspekt 20 oder 21, wobei ein Arbeitsspeicher und der Programmcode im Händlerendgerät dazu ausgebildet sind, eine Mehrzahl von im Händlerendgerät erzeugten erweiterten Transaktionsdateien zwischenzuspeichern und den zwischengespeicherten erweiterten Transaktionsdateien die Händlerkartensignatur zuzuordnen und sie in einemzusammenfassenden Sendevorgang an den Zahlungsdienstserver zu übermitteln.
23. Anordnung nach Aspekt 20, wobei der Programmcode im Händlerendgerät dazu ausgebildet ist, eine am Händlerendgerät eingegebene Kundenkarten-PIN vorläufig zu verschlüsseln sowie aus einer im Händlerendgerät bereitgestellten Transaktionsdatei, einer von der Kundenkarte empfangenen Kundenkartensignatur und einer von der Händlerkarte empfangenen umgeschlüsselten Kundenkarten-PIN eine finale Transaktionsdatei zu erzeugen.
24. Anordnung nach einem der Aspekte 20 bis 23, wobei die Dateneingabe und
   - ausgabe über den Bildschirm des Händlerendgerätes und die drahtlose Nahbereichs-Datenübertragung zwischen dem Händlerendgerät und der Kunden- bzw. Händlerkarte dadurch geschützt sind,
   - dass der Programmcode erkennt, ob der Betriebssystem Kernel des Händlerendgeräts ge-rootet wurde und in diesem Fall seinen Betrieb stoppt, und
   - dass der Programmcode mittels Obfuscation gegen Reverse Engineering geschützt ist.
25. Anordnung nach einem der Aspekte 21 bis 24, weiter umfassend ein anderes Nutzerendgerät zur Ausführung einer Personalisierung des im Händlerendgerät gespeicherten Programmcodes, beispielsweise einen Laptop.

## Patentansprüche

1. Verfahren zum Auslösen einer elektronischen Zahlung über ein Händlerendgerät und eine mit diesem temporär über eine drahtlose Nahbereichs-Datenübertragung, NFC, verbundene und als SmartCard konfigurierte Kundenkarte, mit den Schritten
a) Bereitstellung einer Transaktionsdatei auf dem Händlerendgerät
b) Übermittlung der Transaktionsdatei vom Händlerendgerät an die Kundenkarte
c) Erzeugung einer digitalen Signatur zur Transaktionsdatei auf der Kundenkarte und Ausgabe der Kundenkartensignatur an das Händlerendgerät
d) Erzeugung einer um die Kundenkartensignatur erweiterten Transaktionsdatei
e) Übermittlung der erweiterten Transaktionsdatei vom Händlerendgerät an eine mit diesem ebenfalls temporär über NFC verbundene Händlerkarte
f) Erzeugung einer digitalen Signatur zur erweiterten Transaktionsdatei auf der Händlerkarte und Ausgabe der Händlerkartensignatur an das Händlerendgerät
g) Erzeugung einer finalen Transaktionsdatei, die die Kunden- und Händlerkartensignatur mit umfasst, im Händlerendgerät,
h) Übermittlung der finalen Transaktionsdatei vom Händlerendgerät über ein Mobilfunknetz oder WLAN an einen Zahlungsdienstserver,
i) Abholen oder Empfang einer Transaktions-Bestätigungsnachricht vom Zahlungsdienstserver am Händlerendgerät.

2. Verfahren nach Anspruch 1, wobei die Schritte e) bis i) zusammen für eine Mehrzahl von erweiterten Transaktionsdateien durchgeführt werden, die vorab jeweils mittels der Schritte a) bis d) auf dem Händlerendgerät erzeugt und dann angesammelt werden.

3. Verfahren nach Anspruch 2, wobei sowohl die Schritte e) und f) als auch die Schritte g) bis i) für jede Transaktion einzeln oder mehrere Transaktionen zusammenfassend, zeitlich getrennt von den Schritten a) bis d) durchgeführt werden.

4. Verfahren zum Auslösen einer elektronischen Zahlung über ein Händlerendgerät und eine mit diesem temporär über eine drahtlose Nahbereichs-Datenübertragung (NFC) verbundene und als SmartCard konfigurierte Kundenkarte, mit den Schritten
a) Bereitstellung einer Transaktionsdatei auf dem Händlerendgerät
b) Übermittlung der Transaktionsdatei vom Händlerendgerät an die Kundenkarte
c) Erzeugung einer digitalen Signatur zur Transaktionsdatei auf der Kundenkarte und Ausgabe der Kundenkartensignatur an das Händlerendgerät
c1) Eingabe der online geprüften Kundenkarten-PIN am Händlerendgerät
d') vorläufige Verschlüsselung der Kundenkarten-PIN im Händlerendgerät
e') Übermittlung der Transaktionsdatei, Kundenkartensignatur und vorläufig verschlüsselten Kundenkarten-PIN vom Händlerendgerät an eine mit diesem ebenfalls temporär über NFC verbundene Händlerkarte
f) Entschlüsselung der Kundenkarten-PIN auf der Händlerkarte, Verschlüsselung der Kundenkarten-PIN mit einem auf der Händlerkarte sicher gespeicherten Schlüssel und Ausgabe der umgeschlüsselten Kundenkarten-PIN an das Händlerendgerät g') im Händlerendgerät Erzeugung einer digitalen Händlerkartensignatur zur erweiterten, die Kundenkartensignatur und umgeschlüsselte Kundenkarten-PIN mit enthaltenden finalen Transaktionsdatei und Erzeugung einer finalen Transaktionsdatei, die die Kundenkartensignatur, umgeschlüsselte Kundenkarten-PIN und Händlerkartensignatur mit umfasst
h) Übermittlung der finalen Transaktionsdatei vom Händlerendgerät über ein Mobilfunknetz oder WLAN an einen Zahlungsdienstserver
i) Abholen oder Empfang einer Transaktions-Bestätigungsnachricht vom Zahlungsdienstserver am Händlerendgerät.

5. Verfahren nach Anspruch 4, wobei die Schritte f) und g') ersetzt sind durch die Schritte
f") Entschlüsselung der Kundenkarten-PIN auf der Händlerkarte, Verschlüsselung der Kundenkarten-PIN mit einem auf der Händlerkarte sicher gespeicherten Schlüssel und Erzeugung einer digitalen Signatur zu einer erweiterten Transaktionsdatei auf der Händlerkarte, danach
f1")Ausgabe der umgeschlüsselten Kundenkarten-PIN und der Händlerkartensignatur an das Händlerendgerät
g") Erzeugung einer finalen Transaktionsdatei im Händlerendgerät, die die Kundenkartensignatur, umgeschlüsselte Kundenkarten-PIN und Terminalkartensignatur mit umfasst.

6. Verfahren nach Anspruch 5, wobei folgende Schritte ersetzt sind:
c1) durch c1') handschriftliche Unterschrift des Kunden auf dem Bildschirm des Händlerendgerätes
e') durch e") Übermittlung der Transaktionsdatei und Kundenkartensignatur vom Händlerendgerät an die Händlerkarte, f") durch f") Erzeugung einer digitalen Signatur zur Transaktionsdatei auf der Händlerkarte, f1") durch f1"') Ausgabe der Händlerkartensignatur an das Händlerendgerät, und
g") durch g"') Erzeugung einer finalen Transaktionsdatei im Händlerendgerät, die die Kundenkartensignatur mit umfasst.

7. Verfahren nach einem der vorangehenden Ansprüche, wobei die Dateneingabe und -ausgabe über den Bildschirm des Händlerendgerätes und die drahtlose Nahbereichs-Datenübertragung zwischen dem Händlerendgerät und der Kunden- bzw. Händlerkarte dadurch geschützt sind,
- dass der Programmcode erkennt, ob der Betriebssystem Kernel des Händlerendgeräts ge-rootet wurde und in diesem Fall seinen Betrieb stoppt, und
- dass der Programmcode mittels Obfuscation gegen Reverse Engineering geschützt ist.

8. Verfahren nach Anspruch 7, wobei sich der Programmcode dem Händler gegenüber dadurch als echt erweist, dass er einen Authentizitätscode einblendet, den der Händler im Rahmen der Personalisierung des Programmcodes über ein anderes Nutzerendgerät, zum Beispiel einen Laptop, festgelegt hat.

9. Verfahren nach einem der vorangehenden Ansprüche, wobei die Eingabe der Kundenkarten- und Händlerkarten-PIN zusätzlich dadurch geschützt ist, dass das Tastaturfeld für jede PIN Eingabe zufällig verwürfelt ist.

10. Verfahren nach einem der vorangehenden Ansprüche, wobei die Eingabe der Kundenkarten- und Händlerkarten-PIN dadurch zusätzlich geschützt ist, dass die Händlerkarte als Display Karte mit Tastaturfeld ausgebildet ist.

11. Anordnung zum Auslösen einer elektronischen Zahlung, umfassend
- einen Zahlungsdienstserver,
- ein Händlerendgerät, das einen Programmcode zur Ausführung von Schritten eines Verfahrens zum Auslösen der elektronischen Zahlung und zur Erzeugung einer erweiterten und/oder einer finalen Transaktionsdatei aufweist,
- eine mit dem Händlerendgerät temporär über eine drahtlose Nahbereichs-Datenübertragung, NFC, verbundene und als SmartCard konfigurierte Kundenkarte, die kryptografische Schlüssel und Algorithmen enthält, um eine Kundenkartensignatur zu erzeugen, und
- eine mit dem Händlergerät ebenfalls temporär über NFC verbundene, als SmartCard konfigurierte Händlerkarte, die kryptografische Schlüssel und Algorithmen enthält, um die Kundenkarten-PIN sicher zu verschlüsseln und/oder eine Händlerkartensignatur zu erzeugen.

12. Anordnung nach Anspruch 11, wobei der Programmcode im Händlerendgerät dazu ausgebildet ist, aus einer im Händlerendgerät bereitgestellten Transaktionsdatei und von der Kundenkarte empfangenen Kundenkartensignatur die erweiterte Transaktionsdatei zu erzeugen und aus der erweiterten Transaktionsdatei und einer von der Händlerkarte empfangenen Händlerkartensignatur die finale Transaktionsdatei zu erzeugen und
die Händlerkarte dazu ausgebildet ist, eine vom Händlerendgerät empfangene vorläufig verschlüsselte Kundenkarten-PIN zu entschlüsseln und mit einem auf der Händlerkarte sicher gespeicherten Schlüssel neu zu verschlüsseln.

13. Anordnung nach Anspruch 11 oder 12, wobei ein Arbeitsspeicher und der Programmcode im Händlerendgerät dazu ausgebildet sind, eine Mehrzahl von im Händlerendgerät erzeugten erweiterten Transaktionsdateien zwischenzuspeichern und den zwischengespeicherten erweiterten Transaktionsdateien die Händlerkartensignatur zuzuordnen und sie in einemzusammenfassenden Sendevorgang an den Zahlungsdienstserver zu übermitteln.

14. Anordnung nach Anspruch 11, wobei der Programmcode im Händlerendgerät dazu ausgebildet ist, eine am Händlerendgerät eingegebene Kundenkarten-PIN vorläufig zu verschlüsseln sowie aus einer im Händlerendgerät bereitgestellten Transaktionsdatei, einer von der Kundenkarte empfangenen Kundenkartensignatur und einer von der Händlerkarte empfangenen umgeschlüsselten Kundenkarten-PIN eine finale Transaktionsdatei zu erzeugen.

15. Anordnung nach einem der Ansprüche 11 bis 14, weiter umfassend ein anderes Nutzerendgerät zur Ausführung einer Personalisierung des im Händlerendgerät gespeicherten Programmcodes, beispielsweise einen Laptop.
